# EUROPÄISCHE PATENTSCHRIFT

(11) **EP 4 012 863 B1**
(45) Veröffentlichungstag und Bekanntmachung des Hinweises auf die Patenterteilung: **04.03.2026**
(21) Anmeldenummer: 21212798.9
(22) Anmeldetag: 07.12.2021
(51) Int. Cl.: H02G 9/02, H02G 9/12, B63G 8/00, B63B 35/44, B63B 77/10, H02B 7/06

(54) **WASSERDICHTES UNTERWASSERGEHÄUSE ZUR AUFNAHME VON HOCHSPANNUNGSKOMPONENTEN**
WATERPROOF UNDERWATER HOUSING FOR HOLDING HIGH VOLTAGE COMPONENTS
BOÎTIER ÉTANCHE SOUS-MARIN DESTINÉ AU LOGEMENT DES COMPOSANTS HAUTE TENSION

(30) Priorität: 10.12.2020 DE 102020133037
(43) Veröffentlichungstag der Anmeldung: 15.06.2022
(73) Patentinhaber: TenneT TSO GmbH, 95448 Bayreuth (DE)
(72) Erfinder: Mom, Evert, 95448 Bayreuth (DE); Passau, Raoul, 3890 Gingelom (BE)
(74) Vertreter: Eisenführ Speiser

(56) Entgegenhaltungen:
- WO-A2-2020/041285
- FR-A1- 2 958 783
- US-A- 4 302 291
- US-A1- 2010 084 925
- US-A1- 2015 003 916
- GR��N ERIC: "Snap Panzar(TM)innovative submarine cable protection", HTTPS://WWW.LINKEDIN.COM/, 25 May 2020 (2020-05-25), XP093127441, Retrieved from the Internet <URL:https://www.linkedin.com/pulse/snap-panzar-innovative-submarine-cable-protection-eric-gr%C3%B6%C3%B6n/> [retrieved on 20240205]
- GREENPIPE: "Greenpipe Snipp & Snapp Panzar - subsea cable protection", 2 April 2020 (2020-04-02), XP093127443, Retrieved from the Internet <URL:https://www.youtube.com/watch?v=Xci9z27nmNk&t=101s> [retrieved on 20240205]

## Beschreibung

Die Erfindung betrifft ein wasserdichtes Unterwassergehäuse zur Aufnahme von Hochspannungskomponenten aufweisend Seitenflächen sowie eine Deckfläche und eine Bodenfläche und eine wasserdichte Durchführung für Hochspannungsleitungen.

Die elektrische Leistung von auf Offshore-Windparks liegt im Bereich von vielen Megawatt zum Teil von mehreren hundert Megawatt. Die elektrische Leistung wird auf Offshore-Plattformen auf ein Hochspannungsniveau von bis zu mehreren Hundert Kilovolt transformiert und mittels Hochspannungsleitungen an Land geleitet. Die Hochspannungsleitungen verlaufen am oder im Meeresgrund. Liegt der Offshore-Windpark viele Kilometer vom Land entfernt, sind entsprechend lange Hochspannungsleitungen notwendig, sodass Offshore eine Blindleistungskompensation vorteilhaft ist, zur Kompensation der über die Länge der Hochspannungsleitung entstehende Blindleistung. Hierzu sind weitere Offshore-Plattformen notwendig, auf der Hochspannungskomponenten zur Blindleistungskompensation installiert werden. Derartige Offshore-Plattformen sind in der Herstellung und Wartung sehr kostenintensiv und gegebenenfalls störend für die Natur oder den Schiffsverkehr.

Der Erfindung liegt die Aufgabe zugrunde, Offshore eine kostengünstige und für die Umwelt wenig belastende Möglichkeit für eine Blindleistungskompensation von Hochspannungsleitungen eines Offshore-Windparks zu schaffen.

Diese Aufgabe wird erfindungsgemäß mit einem Unterwassergehäusesystem gemäß den Merkmalen des Anspruchs 1 gelöst.

Die weitere Ausgestaltung der Erfindung ist den Unteransprüchen zu entnehmen.

Erfindungsgemäß ist also ein wasserdichtes Unterwassergehäuse zur Aufnahme von Hochspannungskomponenten aufweisend Seitenflächen sowie eine Deckfläche und eine Bodenfläche und eine wasserdichte Durchführung für Hochspannungsleitungen vorgesehen, wobei das Unterwassergehäuse mit luftgefüllten Ballastierungselementen an der Wasseroberfläche schleppbar ist und durch Füllen der Ballastierungselemente versenkbar ist.

Hierdurch wird in vorteilhafter Weise erreicht, dass das Unterwassergehäuse mit den Hochspannungskomponenten, also die gesamte Blindleistungskompensationseinheit, kostengünstig an Land, beispielsweise in einem Trockendock, hergestellt werden kann. Bevorzugt werden bereits an Land die Funktionen der Blindleistungskompensationseinheit geprüft. Die Blindleistungskompensationseinheit kann mittels eines Schiffs auf See geschleppt werden, wo sie an der Wasseroberfläche schwimmend mit den Hochspannungsleitungen verbunden wird, beziehungsweise die Hochspannungsleitungen an die Hochspannungskomponenten angeschlossen werden. Hierzu werden die Anschlussbereiche der Hochspannungsleitungen an die Wasseroberfläche gefördert. Folgend werden die Ballastierungselemente mit Ballast versehen, sodass das Unterwassergehäuse zum Meeresgrund sinkt. Der Grundgedanke der Ballastierung besteht auch darin, dass Wartungsarbeiten durchgeführt werden können, wenn sich das Unterwassergehäuse in Schwimmstellung an der Wasseroberfläche befindet.

Die Ballastierungselemente können zwar mit beliebigen Werkstoffen mit einer hohen Dichte, wie Blei oder Kies, befüllbar sein, die dann zum Aufschwimmen des Unterwassergehäuses abgetrennt werden müssten. Bevorzugt sind die Ballastierungselemente jedoch Ballasttanks, die insbesondere für die Befüllung mit Wasser geeignet sind. Hierzu sind Pumpen im Inneren des Unterwassergehäuses vorgesehen, um dieses wieder aufzuschwimmen.

Obwohl das Unterwassergehäusesystem im normalen Betrieb keine externe Energie benötigt, da die elektrische Energie intern, beispielsweise mit Hilfe von Hochleistungs-Stromwandlern, erzeugt wird, kann auch eine externe Energieversorgung vorgesehen sein, insbesondere für den Fall, dass kein Strom durch die Hauptkabel fließt.

Es kann auch ein Backup-System, beispielsweise ein Anschluss für eine Notstromversorgung und/oder für eine Notfall-Telekommunikation vorgesehen und durch eine Leitung, beispielsweise ein Rohr, an die Oberfläche geführt werden. Durch diese Leitung kann Luft in die Ballastierungselemente eingeblasen werden, wenn die Pumpen ausfallen bzw. bei solchen Bauformen, bei denen auf eine Pumpe verzichtet wurde.

Die Ballastierungselemente bzw. die Pumpen werden auch benötigt, um das Unterwassergehäuse beim Absinken und Auftauchen bzw. Aufsteigen horizontal zu halten (dynamischer Ausgleich durch Befüllen der Tanks).

Das Unterwassergehäuse kann aus einer Vielzahl bekannter Werkstoffe hergestellt sein, wie zum Beispiel Stählen, Aluminiumlegierungen oder anderen Metallen. In einer besonders praxisrelevanten Ausführungsform weisen die Seitenwände, die Deckfläche und/oder die Bodenfläche jedoch Beton auf oder bestehen aus Beton. Hierdurch wird ein besonders kostengünstiges sowie seewasserbeständiges Unterwassergehäuse herstellbar. Es versteht sich von selbst, dass die Hochspannungskomponenten in das teilweise fertiggestellte Unterwassergehäuse eingefügt werden, bevor alle Flächen des Unterwassergehäuses verschlossen sind.

In einer bevorzugten Ausführungsform befindet sich die Deckfläche des bevorzugt in der Grundform kubischen Unterwassergehäuses im schwimmenden Zustand zumindest 0,5 m, bevorzugt zumindest 1 m und weiter bevorzugt zumindest 1,5 m oberhalb der Wasseroberfläche, solange die Ballastierungselemente mit Luft gefüllt sind. Hierdurch wird erreicht, dass auch bei leichtem Seegang ein Anschließen der Hochspannungsleitungen im Bereich der Deckfläche ohne Einwirkung von Seewasser vorgenommen werden kann.

Bevorzugt weist das Unterwassergehäuse einen trockenen Kabelanschlussbereich, insbesondere oberhalb der Deckfläche auf, wobei der Kabelanschlussbereich auch zum weiteren Unterwassergehäuse abgedichtet ist. Hierdurch wird erreicht, dass die Anschlussstelle der Hochspannungsleitungen in einem vom Seewasser geschützten Bereich liegt und somit besonders wenig Wartung bedarf.

Eine bevorzugte Ausführungsform des Unterwassergehäuses weist eine wiederverschließbare Öffnung für Personen auf. Hierdurch können Personen zu Wartungsarbeiten in das Unterwassergehäuse gelangen, ohne dass Flächen des Gehäuses entfernt oder geöffnet werden müssen. Befindet sich die wiederverschließbare Öffnung bei luftgefüllten Ballastierungselementen oberhalb der Wasseroberfläche, ist Offshore eine Wartung an den Hochspannungskomponenten möglich.

Bevorzugt weist das Unterwassergehäuse einen Schutzrahmen zum Schutz des Kabelanschlussbereichs und/oder der wiederverschließbaren Öffnung auf. Die Gefahr einer Beschädigung des Kabelanschlussbereichs oder der wiederverschließbaren Öffnung sowie die Gefahr des Eintretens von Seewasser werden verringert.

In einer bevorzugten Ausführungsform weist das Unterwassergehäuse eine Nutzlast von zumindest 10 Tonnen, bevorzugt zumindest 100 Tonnen und weiter bevorzugt zumindest 300 Tonnen auf. Das Aufnehmen von entsprechend schweren Hochspannungskomponenten wird ermöglicht.

Das Unterwassergehäusesystem kann bevorzugt modular aufgebaut sein, wenn die Grenzen der praktischen Gewichtsbeschränkungen überschritten werden oder wenn in Zukunft eine Trennung aufgrund widersprüchlicher Funktionen erforderlich sein sollte. Wenn beispielsweise zwei getrennte Kabelverbindungen zur Plattform verwendet werden, würde jede über ein eigenes Unterwassergehäusemodul verfügen, sodass sich Notfälle, insbesondere Fehler, nicht ausbreiten oder die Wartung unabhängig gehandhabt bzw. durchgeführt werden kann. Dasselbe würde für alle redundanten Systeme gelten. In einem modularen Unterwassergehäusesystem könnten sich die Module dasselbe größere Basissystem teilen, um Platz für mehrere Module zu schaffen.

Des Weiteren ist erfindungsgemäß ein Unterwassergehäusesystem vorgesehen, das ein Gründungselement aufweist. Hierdurch werden eine Aufnahmeebene für das Unterwassergehäuse und ein sicherer Stand geschaffen.

Das Gründungselement ist bevorzugt zumindest überwiegend im Untergrund eingelassen, wobei das Gründungselement eine Bodenplatte und Seitenplatten aufweist. Hierdurch wird ein besonders sicherer Stand des Unterwassergehäuses erreicht, das zumindest teilweise vor einer Wasserströmung geschützt ist. Des Weiteren wird auch bei geringen Wassertiefen ein möglicher Schiffsverkehr nicht behindert, wenn das Unterwassergehäuse nicht oder nicht wesentlich aus dem Meeresgrund herausragt.

Erfindungsgemäß weist das Unterwassergehäuse eine Vorrichtung zum Abdichten zum Gründungselement auf. Hierdurch wird wirksam verhindert, dass der Spalt, der sich zwischen den Seitenflächen des Gründungselements und dem Unterwassergehäuse bildet, durch Sedimente gefüllt wird, was ein Auftauchen des Unterwassergehäuses behindern könnte.

In einer besonders praxisrelevanten Ausführungsform weist das Unterwassergehäusesystem Befestigungsmittel auf, die um zumindest eine Unterwassergehäuselänge vom Gründungselement beabstandet sind und zumindest eine Halteleine zum Fixieren des Unterwassergehäuses aufweisen. Hierdurch wird erreicht, dass durch das Unterzugbringen der Halteleine, insbesondere durch eine am gegenüberliegenden Ende des Unterwassergehäuses angebrachten Zugleine, die Bewegungsfreiheit des Unterwassergehäuses eingeschränkt wird und ein Positionieren des Unterwassergehäuses auf dem Gründungselement vereinfacht wird. Bevorzugt werden zumindest zwei zueinander beanstandete Befestigungsmittel mit jeweils zumindest einer Halteleine verwendet, wobei die Halteleinen voneinander beanstandete Angriffspunkte am Unterwassergehäuses haben, sodass durch ein Unterzugsetzen der Halteleinen und Füllen der Ballastierungselemente eine besonders gut koordinierbare und kontrollierbare Bewegung des Unterwassergehäuses zum Gründungselement ermöglicht wird.

In den Zeichnungen ist ein Ausführungsbeispiel der Erfindung dargestellt. Dieses wird im Folgenden näher beschrieben. Die Zeichnungen zeigen ein Unterwassergehäuse und ein Unterwassergehäusesystem in schematischer Darstellung.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Schnittansicht eines Unterwassergehäuses;
- Fig. 2: ein an eine Hochspannungsleitung angeschlossenes schwimmendes Unterwassergehäuse;
- Fig. 3: ein an eine Hochspannungsleitung angeschlossenes versenktes Unterwassergehäuse;
- Fig. 4: eine Aufsicht eines versenkten Unterwassergehäusesystems.

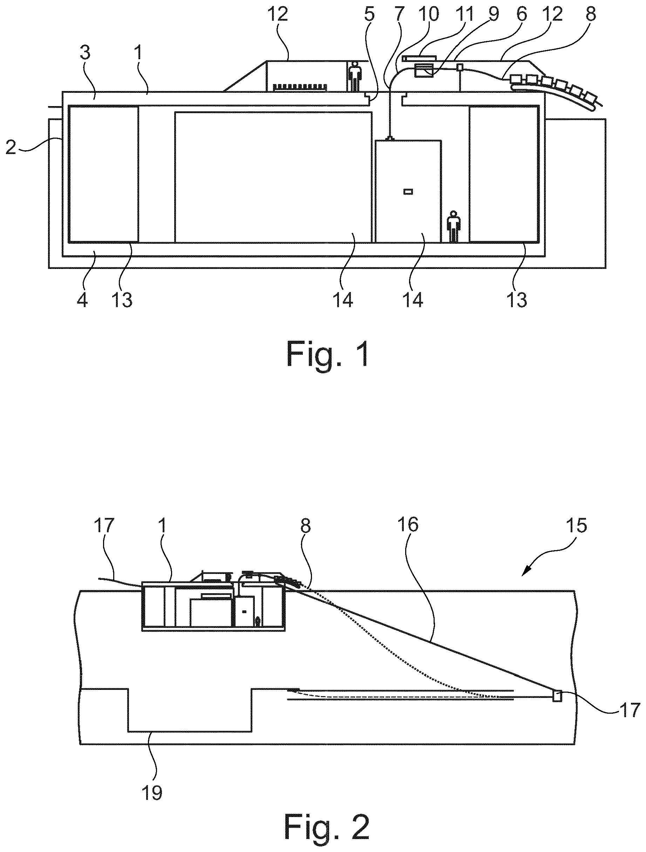

Figur 1 zeigt ein kubisches sowie wasserdichtes Unterwassergehäuse 1 mit vier Seitenflächen 2, einer Deckfläche 3 und einer Bodenfläche 4. Die Seitenflächen 2, die Deckfläche 3 und die Bodenfläche 4 sind aus einem Beton hergestellt, der eine geringe Wasserdurchlässigkeit und Rissneigung aufweist. Der Beton kann als Normalbeton oder als Leichtbeton ausgeführt sein.

Die Deckfläche 3 weist eine wiederverschließbare Öffnung 5 für Personen auf, die im geöffneten Zustand dargestellt ist. Schwimmt das Unterwassergehäuse 1, kann die wiederverschließbare Öffnung 5 auch Offshore geöffnet werden. Auf der Deckfläche 3 ist des Weiteren ein trockener Kabelanschlussbereich 6 derart angeordnet, dass er auch die wiederverschließbare Öffnung 5 umfasst. Der Kabelanschlussbereich 6 nimmt durch eine dichtende Durchführung 7 ein Hochspannungsleitung 8 auf, die zu einer Anschlussbuchse 9 geführt wird. Das Hochspannungskabel 10 wird bereits an Land montiert und gedichtet durch die Deckfläche 3 geführt. Der Kabelanschlussbereich 6 weist eine dichtende Klappe 11 zur Umgebung auf. Beidseits des Kabelanschlussbereichs 6 ist ein Schutzrahmen 12 vorgesehen, der zum Schutz des Kabelanschlussbereichs 6 dient.

In jeder Ecke der Grundfläche des kubischen Unterwassergehäuses 1 ist ein Ballastierungselement 13 angeordnet, das in dieser Ausführungsform als Ballasttank ausgeführt ist und über nicht dargestellte Verbindungselemente mit Wasser oder Luft befüllt werden kann. Für eine steuerbare Schwimm- beziehungsweise Tauchlage sind die Ballasttanks unabhängig voneinander befüllbar. Die Hochspannungskomponenten 14 sind zwischen den Ballasttanks angeordnet. Zum Einstellen der Luftfeuchtigkeit im Unterwassergehäuse ist im Unterwassergehäuse ein Luftentfeuchter angeordnet.

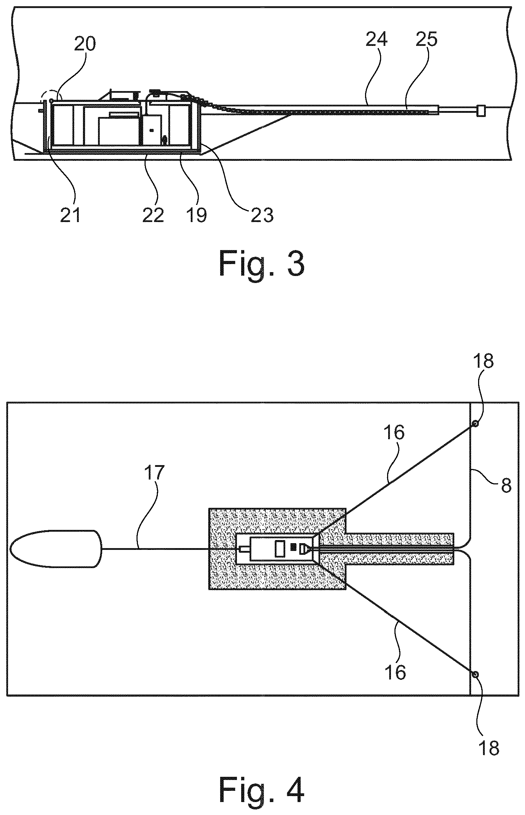

In Figur 2 ist ein Unterwassergehäusesystem 15 mit einem an der Wasseroberfläche schwimmenden Unterwassergehäuse 1 dargestellt, das bereits mit den Hochspannungsleitungen 8 sowie Halteleinen 16 verbunden ist. Die Halteleinen 16 werden unter Spannung gehalten, indem mit Zugleinen 17 eine Kraft in das Unterwassergehäuse 1 eingeleitet wird. Die Halteleinen 16 sind mittels Befestigungsmitteln 18 am Meeresboden befestigt, wie auch in Figur 4 ersichtlich. Nach dem Anschließen der Hochspannungsleitung 8 im Kabelanschlussbereich 6 und Schließen der Öffnung 5 sowie der Klappe 11, werden die Ballasttanks mit Wasser befüllt, sodass das Unterwassergehäuse 1 über die Zugleinen 17 kontrolliert in das Gründungselement 19 positioniert wird.

In Figur 3 ist der Positioniervorgang des Unterwassergehäuses 1 in dem Gründungselement 19 abgeschlossen. Das Unterwassergehäuse 1 schließt in der Höhe nahezu bündig mit dem Gründungselement 19 ab. Eine Vorrichtung 20 zum Abdichten des Spalts 21, der sich zwischen dem Unterwassergehäuse 1 und dem Gründungselement 19 ausbildet, dichtet den Spalt 21 ab, sodass Ablagerungen im Spalt 21 vermieden werden. Das Gründungselement 19 weist eine Bodenplatte 22 sowie Seitenplatten 23 auf. Die Hochspannungsleitung 8 wird durch einen mittels eines Deckels 24 verschließbaren Kanal 25 im Meeresboden geführt. Zum Einbringen des Gründungselements 19 in den Meeresboden wird dieser in einem Teilbereich ausgehoben und die das Gründungselement 18 aufnehmende Fläche geebnet und mit Schotter präpariert. Folgend wird das Gründungselement 19 gesetzt und die verbleibende Aussparung mit Schotter aufgefüllt und mit Beton abgedeckt.

Entsprechend einer nicht dargestellten Alternative, die bei Kabeln mit niedrigerem Spannungsniveau oder geringerem Durchmesser möglich ist, könnten die Kabel auch in einem Wendelsystem verlegt werden, wodurch ein vertikales Heben ermöglicht wird. Ein solches vertikales Steigleitungssystem kann auch implementiert werden, um ein modular aufgebautes Unterwassergehäusesystem kompakter zu machen.

Figur 4 zeigt eine Aufsicht auf das Unterwassergehäusesystem 15. Ein Schiff leitet mittels einer Zugleine 17 eine Kraft auf der einen Seite des Unterwassergehäuses 1 ein und spannt hierdurch die Halteleinen 16, die an der anderen Seite des Unterwassergehäuses 1 befestigt sind, wodurch das Unterwassergehäuse 1 zum Gründungselement 19 ausgerichtet und positioniert wird. Die Hochspannungsleitung 8 wird senkrecht zur Hauptlängsrichtung der Hochspannungsleitung 8 zum Unterwassergehäuse 1 geführt.

**BEZUGSZEICHENLISTE**

| | | | |
|---|---|---|---|
| 1 | Unterwassergehäuse | 16 | Halteleine |
| 2 | Seitenfläche | 17 | Zugleine |
| 3 | Deckfläche | 18 | Befestigungsmittel |
| 4 | Bodenfläche | 19 | Gründungselement |
| 5 | Öffnung | 20 | Vorrichtung |
| | | | |
| 6 | Kabelanschlussbereich | 21 | Spalt |
| 7 | Durchführung | 22 | Bodenplatte |
| 8 | Hochspannungsleitung | 23 | Seitenplatten |
| 9 | Anschlussbuchse | 24 | Deckel |
| 10 | Hochspannungskabel | 25 | Kanal |
| | | | |
| 11 | Klappe | | |
| 12 | Schutzrahmen | | |
| 13 | Ballastierungselement | | |
| 14 | Hochspannungskomponenten | | |
| 15 | Unterwassergehäusesystem | | |

## Patentansprüche

1. Unterwassergehäusesystem (15) mit einer Hochspannungsleitung (8) und mit einem wasserdichten Unterwassergehäuse (1) zur Aufnahme von Hochspannungskomponenten (14) aufweisend Seitenflächen (2) sowie eine Deckfläche (3) und eine Bodenfläche (4) und eine wasserdichte Durchführung (7) für die Hochspannungsleitung (8), wobei das Unterwassergehäuse (1) mit luftgefüllten Ballastierungselementen (13) an der Wasseroberfläche schleppbar ist und durch Füllen der Ballastierungselemente (13) versenkbar ist, **dadurch gekennzeichnet, dass** das Unterwassergehäusesystem ein Gründungselement aufweist und das Unterwassergehäuse (1) nach Abschluss des Positioniervorgangs des Unterwassergehäuses (1) in dem eine Bodenplatte (22) sowie Seitenplatten (23) aufweisenden Gründungselement (19) in der Höhe nahezu bündig abschließt, und dass das Unterwassergehäuse (1) eine Vorrichtung (20) zum Abdichten zu dem Gründungselement (19) aufweist, in dem die Vorrichtung (20) zum Abdichten des Spalts (21) ausgeführt ist, der sich zwischen dem Unterwassergehäuse (1) und dem Gründungselement (19) ausbildet, und wobei die Hochspannungsleitung (8) durch einen mittels eines Deckels (24) verschließbaren Kanal (25) im Meeresboden geführt ist.

2. Unterwassergehäusesystem (15) nach Anspruch 1, **dadurch gekennzeichnet, dass** die Seitenflächen (2), die Deckfläche (3) und/oder die Bodenfläche (4) Beton aufweisen und bevorzugt aus Beton bestehen.

3. Unterwassergehäusesystem (15) nach Anspruch 1 oder 2, **dadurch gekennzeichnet, dass** die Deckfläche (3) des bevorzugt in der Grundform kubischen Unterwassergehäuses (1) mit luftgefüllten Ballastierungselementen (13) zumindest 0,5 m, bevorzugt zumindest 1 m und weiter bevorzugt zumindest 1,5 m aus der Wasseroberfläche herausragt.

4. Unterwassergehäusesystem (15) nach zumindest einem der vorhergehenden Ansprüche, **dadurch gekennzeichnet, dass** das Unterwassergehäuse (1) einen trockenen Kabelanschlussbereich (6) aufweist, wobei der Kabelanschlussbereich (6) zum weiteren Unterwassergehäuse (1) abgedichtet ist.

5. Unterwassergehäusesystem (15) nach zumindest einem der vorhergehenden Ansprüche, **dadurch gekennzeichnet, dass** das Unterwassergehäuse (1) eine wiederverschließbare Öffnung (5) für Personen aufweist.

6. Unterwassergehäusesystem (15) nach Anspruch 4, **dadurch gekennzeichnet, dass** das Unterwassergehäuse (1) einen Schutzrahmen (12) zum Schutz des Kabelanschlussbereichs (6) und/oder die wiederverschließbare Öffnung (5) aufweist.

7. Unterwassergehäusesystem (15) nach zumindest einem der vorhergehenden Ansprüche, **dadurch gekennzeichnet, dass** das Unterwassergehäuse (1) eine Nutzlast von zumindest 10 Tonnen, bevorzugt zumindest 100 Tonnen und weiter bevorzugt zumindest 300 Tonnen aufweist.

8. Unterwassergehäusesystem (15) nach zumindest einem der vorhergehenden Ansprüche, **dadurch gekennzeichnet, dass** das Gründungselement (19) zumindest überwiegend im Untergrund eingelassen ist.

9. Unterwassergehäusesystem (15) nach zumindest einem der vorhergehenden Ansprüche, **dadurch gekennzeichnet, dass** das Unterwassergehäusesystem (15) Befestigungsmittel (18) aufweist, die um zumindest eine Unterwassergehäuselänge vom Gründungselement (19) beabstandet sind und zumindest eine Halteleine (16) zum Fixieren des Unterwassergehäuses (1) aufweisen.

## Claims

1. Underwater housing system (15) with a high-voltage cable (8) and a waterproof underwater housing (1) for accommodating high-voltage components (14), having side surfaces (2) as well as a top surface (3) and a bottom surface (4) and a waterproof feedthrough (7) for the high-voltage cable (8), wherein the underwater housing (1) with air-filled ballast elements (13) can be towed at the water surface and can be submerged by filling the ballast elements (13), **characterised in that** the underwater housing system has a foundation element and that the underwater housing (1) is almost flushed with respect to a height in the foundation element (19) comprising a base plate (22) and side plates (23) after completion of the positioning process of the underwater housing (1), and that the underwater housing (1) has a device (20) for sealing against the foundation element (19), wherein the device (20) is adapted for sealing the gap (21), which is present between the underwater housing (1) and the foundation element (19), and wherein the high-voltage cable (8) is routed through a channel (25), which can be closed by means of a cover (24) in the seabed.

2. Underwater housing system (15) according to claim 1, **characterised in that** the side surfaces (2), the top surface (3) and/or the bottom surface (4) comprise concrete and are preferably made of concrete.

3. Underwater housing system (15) according to claim 1 or 2, **characterised in that** the top surface (3) of the underwater housing, which is preferably cubic in shape (1), with air-filled ballast elements (13), protrudes at least 0.5 m, preferably at least 1 m and further preferably at least 1.5 m above the water surface.

4. Underwater housing system (15) according to at least one of the preceding claims, **characterised in that** the underwater housing (1) has a dry cable connection area (6), wherein the cable connection area (6) is sealed to the rest of the underwater housing (1).

5. Underwater housing system (15) according to at least one of the preceding claims, **characterised in that** the underwater housing (1) has a resealable opening (5) for persons.

6. Underwater housing system (15) according to claim 4, **characterised in that** the underwater housing (1) has a protective frame (12) for protecting the cable connection area (6) and/or the resealable opening (5).

7. Underwater housing system (15) according to at least one of the preceding claims, **characterised in that** the underwater housing (1) has a payload of at least 10 tonnes, preferably at least 100 tonnes and more preferably at least 300 tonnes.

8. Underwater housing system (15) according to at least one of the preceding claims, **characterised in that** the foundation element (19) is at least predominantly embedded in the ground.

9. Underwater housing system (15) according to at least one of the preceding claims, **characterised in that** the underwater housing system (15) has fastening means (18) which are spaced at least one underwater housing length from the foundation element (19) and have at least one retaining line (16) for fixing the underwater housing (1).

## Revendications

1. Système de boîtier sous-marin (15) avec un câble haute tension (8) et avec un boîtier sous-marin (1) étanche pour accueillir des composants haute tension (14) présentant des surfaces latérales (2) ainsi qu'une surface supérieure (3) et une surface inférieure (4) et un passage (7) étanche pour le câble haute tension (8), dans lequel le boîtier sous-marin (1) est tractable à la surface de l'eau avec des éléments de ballastage (13) remplis d'air et est immergeable par remplissage des éléments de ballastage (13), **caractérisé en ce que** le système de boîtier sous-marin présente un élément de fondation et le boîtier sous-marin (1) se termine presque à niveau après l'achèvement du processus de positionnement du boîtier sous-marin (1) dans l'élément de fondation (19) présentant une plaque de base (22) ainsi que des plaques latérales (23), et que le boîtier sous-marin (1) présente un dispositif (20) pour l'étanchéité par rapport à l'élément de fondation (19) dans lequel est conçu le dispositif (20) pour l'étanchéité de l'espace (21) qui se constitue entre le boîtier sous-marin (1) et l'élément de fondation (19), et dans lequel le câble haute tension (8) est guidé dans le fond marin à travers un canal (25) pouvant être fermé au moyen d'un couvercle (24).

2. Système de boîtier sous-marin (15) selon la revendication 1, **caractérisé en ce que** les surfaces latérales (2), la surface supérieure (3) et/ou la surface inférieure (4) présentent du béton et sont de préférence en béton.

3. Système de boîtier sous-marin (15) selon la revendication 1 ou 2, **caractérisé en ce que** la surface supérieure (3) du boîtier sous-marin (1) de préférence de forme cubique dépasse d'au moins 0,5 m, de préférence d'au moins 1 m et plus préférentiellement d'au moins 1,5 m de la surface de l'eau avec des éléments de ballastage (13) remplis d'air.

4. Système de boîtier sous-marin (15) selon au moins une des revendications précédentes, **caractérisé en ce que** le boîtier sous-marin (1) présente une zone de connexion de câble (6) sèche, dans lequel la zone de connexion de câble (6) est étanchéifiée par rapport au reste du boîtier sous-marin (1).

5. Système de boîtier sous-marin (15) selon au moins une des revendications précédentes, **caractérisé en ce que** le boîtier sous-marin (1) présente une ouverture refermable (5) pour les personnes.

6. Système de boîtier sous-marin (15) selon la revendication 4, **caractérisé en ce que** le boîtier sous-marin (1) présente un cadre de protection (12) pour protéger la zone de connexion de câble (6) et/ou l'ouverture refermable (5).

7. Système de boîtier sous-marin (15) selon au moins une des revendications précédentes, **caractérisé en ce que** le boîtier sous-marin (1) présente une charge utile d'au moins 10 tonnes, de préférence au moins 100 tonnes et plus préférentiellement d'au moins 300 tonnes.

8. Système de boîtier sous-marin (15) selon au moins une des revendications précédentes, **caractérisé en ce que** l'élément de fondation (19) est en grande partie encastré dans le sol.

9. Système de boîtier sous-marin (15) selon au moins une des revendications précédentes, **caractérisé en ce que** le système de boîtier sous-marin (15) présente des moyens de fixation (18) qui sont espacés d'au moins une longueur de boîtier sous-marin par rapport à l'élément de fondation (19) et présentent au moins un filin d'amarrage (16) pour fixer le boîtier sous-marin (1).
